# EUROPÄISCHE PATENTSCHRIFT

(11) **EP 3 353 587 B1**
(45) Veröffentlichungstag und Bekanntmachung des Hinweises auf die Patenterteilung: **27.11.2019**
(21) Anmeldenummer: 17777777.8
(22) Anmeldetag: 18.09.2017
(51) Int. Cl.: G02B 27/00, G02B 13/04

(54) **OBJEKTIV FESTER BRENNWEITE UND KONSTANTER BAULÄNGE FÜR AUTOFOKUSANWENDUNGEN**
OBJECTIVE WITH A FIXED FOCAL LENGTH AND A CONSTANT STRUCTURAL LENGTH FOR AUTOFOCUS APPLICATIONS
OBJECTIF DE DISTANCE FOCALE FIXE ET LONGUEUR CONSTANTE POUR APPLICATIONS DE MISE AU POINT AUTOMATIQUE

(30) Priorität: 18.09.2016 DE 102016117547
(43) Veröffentlichungstag der Anmeldung: 01.08.2018
(73) Patentinhaber: Leica Camera AG, 35578 Wetzlar (DE)
(72) Erfinder: STUIBLE, Dietmar, 35578 Wetzlar (DE); KAMMANS, Sigrun, 35745 Herborn (DE)
(74) Vertreter: Stamer, Jan
(86) Internationale Anmeldenummer: PCT/DE2017/100796
(87) Internationale Veröffentlichungsnummer: WO 2018/050174

(56) Entgegenhaltungen:
- JP-A- 2007 298 832
- JP-A- 2016 109 810
- US-A1- 2004 017 605

## Beschreibung

Die Erfindung betrifft ein auswechselbares Objektiv fester Brennweite gemäß dem Oberbegriff von Anspruch 1. Aus JP 2016 109810 A, JP 2007 298832 A und US 2004/017605 A1 sind gattungsgemäße Objektive bekannt.

Solche Objektive sind für fotografische Bildaufnahmezwecke aus der analogen Fotografie bekannt und werden ebenfalls für die digitale Bildaufnahme genutzt. Zunehmend verfügen digitale Kameras nicht mehr über einen in den Bildaufnahmestrahlengang ein- und ausschwenkbaren Spiegel, der das zu fotografierende Objektfeld zu Scharfstellzwecken und zur Auswahl des Bildausschnitts über ein Prisma in einen Sucher umlenkt, sondern die Bildauswahl erfolgt durch permanente Bildaufnahme mit dem Bildaufnahmesensor und anhand eines daraus gewonnenen, auf einem Display an der Rückseite der Kamera dargestellten Objektausschnitts oder mit Hilfe eines elektronischen Suchers (Electronic View Finder). Die Scharfstellung (Fokussierung) dieser Objektive erfolgt mit Hilfe von elektronischen Autofokussignalen und entsprechender Ansteuerung des Fokussiergliedes im Objektiv automatisch. Üblicherweise bestehen fotografische Objektive zur Erzeugung einer guten Abbildungsleistung aus zwei oder mehr Linsengruppen, die wiederum einzelne ortsfest oder entlang der optischen Achse verschiebbar gelagerte Linsenelemente aufweisen. Es ist bekannt, zur Fokussierung des Objektivs auf unterschiedliche Objektentfernungen eine entlang der optischen Achse verschiebbare Linsengruppe vorzusehen. Dies kann beispielsweise der Objektivkopf, also die der Objektebene zugewandte vordere Linsengruppe oder das komplette Objektiv sein. Eine solche Anordnung wird auch Gesamtfokussierung genannt. Bei dieser Art der Fokussierung ändert sich jedoch die Baulänge des Objektivs während der Fokussierung, was Nachteile hinsichtlich der Dichtigkeit mit sich bringt. Daher sind auch Objektive bekannt, bei denen ein im Objektiv verschiebbar gelagertes Linsenglied, das sogenannte Fokussierglied, entlang der optischen Achse verschoben wird. Eine solche Anordnung wird auch Innenfokussierung genannt. Zwar lassen sich Objektive dieser Bauart in weiten Bereichen von einer unendlichen Objektentfernung bis hin zum Nahbereich von wenigen Metern oder gar Zentimetern fokussieren, das heißt es erfolgt eine scharfe Abbildung des Objektes auf die Bildaufnahmeebene, aber gerade im Nahbereich nimmt die optische Abbildungsleistung ab. Optische Bildfehler, wie Verzeichnung, Bildfeldwölbung, Öffnungsfehler, Farbfehler und Koma nehmen zu. Die Bildergebnisse genügen dann trotz einer Fokussierung auf den gewünschten Objektabstand oftmals nicht mehr den Anforderungen an die Abbildungsleistung moderner Bildaufnahmesysteme. Wenn dennoch eine hohe Abbildungsleistung erreicht werden soll, sind komplizierte und teure Objektivkonstruktionen mit einer hohen Anzahl unterschiedlicher Linsen notwendig. Alternativ ist es bekannt, zur Erhöhung der Abbildungsleistung bei Objektiven mit Gesamtfokussierung, vornehmlich im Nahbereich, ein zweites bewegliches Linsenelement, ein sogenanntes Floating Element vorzusehen, welches den Abbildungsfehlern entgegenwirkt, im Übrigen aber kaum Einfluss auf die Fokuslage hat.

Um Objektive variabler Brennweiten (Zoom-Objektive) zu realisieren, werden meist mindestens zwei, auf Kurven relativ zueinander verstellbare Linsenelemente oder Linsengruppen vorgesehen. Die Fokussierung erfolgt nach wie vor mit einem zur Fokussierung verstellbaren Fokuselement. Bei solchen bekannten Objektiven übernimmt demnach eine Gruppe aus zwei Linsengruppen die Brennweitenveränderung und davon unabhängig wird eine weitere Linsengruppe zur Fokussierung verwendet.

Ein solches Objektiv mit veränderbarer Brennweite ist zum Beispiel aus US 2013/0070124 A1 bekannt. Dieses Objektiv weist zur Brennweiten- und Fokusveränderung drei bewegbare Linsengruppen auf.

Aus US 8,619,374 B2 ist ein auswechselbares Objektiv mit veränderbarer Brennweite bekannt. Auf eine feststehende Frontlinsengruppe folgt eine axial verstellbare Linsengruppe zur Brennweitenänderung. Zwischen zwei weiteren feststehenden Linsengruppen sind zwei unabhängig voneinander verstellbare Fokussier-Linsengruppen eingefügt. Mit Hilfe der beiden Fokussier-Linsengruppen sollen in Abhängigkeit von der Brennweitenänderung entstehende Abbildungsfehler ausgeglichen werden.

Der Erfindung lag die Aufgabe zugrunde, bei auswechselbaren Objektiven mit fester Brennweite eine sehr hohe konstante Bildqualität bei der Fokussierung auf unterschiedliche Objektentfernungen von Unendlich bis in den extremen Nahbereich unter 30 cm oder mit einem Abbildungsmaßstab von bis zu 1:3 zu ermöglichen, wobei die zur Fokussierung benötigten Linsen einen einfachen Aufbau mit geringem Gewicht aufweisen sollten, um einen schnellen und leisen Autofokusantrieb mit hohen Beschleunigungen erreichen zu können. Weiterhin sollten die Objektive zur Verwendung an spiegellosen Aufnahmesystemen mit kurzem Auflagemaß geeignet sein, eine kurze Schnittweite aufweisen und gleichzeitig einen ausreichend großen Abstand zwischen Austrittspupille des Objektivs und der Abbildungsebene aufweisen. Zur Eignung für moderne Bildsensoren sollte der Lichteinfallswinkel in der Abbildungsebene, vom Lot her betrachtet, nicht zu groß werden.

Diese Aufgabe wird erfindungsgemäß durch die kennzeichnenden Merkmale des Anspruchs 1 gelöst. Vorteilhafte Weiterbildungen ergeben sich aus den Merkmalen der Unteransprüche.

Zu den in den Ansprüchen angegebenen Lösungsmerkmalen ist zu beachten, dass beim modernen Optik-Design üblicherweise automatische Korrektionsprogramme, wie z.B. "Code V" von Optical Research Associates, eingesetzt werden, die in der Lage sind, aus vorgegebenen Linsenfolgen und Brechkraftverteilungen Vorschläge für funktionsfähige Objektivsysteme mit einem für eine bestimmte Aufgabe optimierten Korrektionszustand zu berechnen. Aufgrund gezielter Veränderungen der angegebenen Parameter durch den Optikkonstrukteur wird der automatisch erreichte Korrektionszustand jeweils weiter verbessert.

Mit den Merkmalen des Anspruchs 1 lassen sich auf diese Weise bereits die Konstruktionsdaten für Radien, Linsendicken, Linsenabstände, Brechzahlen und Abbezahlen der einzusetzenden optischen Gläser gewinnen. Bei Berücksichtigung der in den Unteransprüchen angegebenen Merkmale lassen sich die Konstruktionsparameter schrittweise gezielt verbessern.

In der Zeichnung sind Ausführungsbeispiele des erfindungsgemäßen Objektivs maßstäblich dargestellt, Konstruktionsdaten können den den jeweiligen Figuren zugeordneten Tabellen entnommen werden. Für den Fachmann, einen Optikkonstrukteur, ist ersichtlich, dass der konstruktive Aufwand für erfindungsgemäße Objektive sinkt, wenn dafür eine geringere optische Abbildungsleistung akzeptiert wird.

Das wesentliche Lösungsmerkmal erfindungsgemäßer Objektive besteht darin, zwei entlang einer optischen Achse in Bezug auf eine Abbildungsebene verschiebbar gelagerte Fokussier-Linsengruppen in einem Objektivtubus vorzusehen, wobei eine Fokussiervordergruppe von der Objektseite her gesehen vor und eine Fokussierhintergruppe von der Objektseite her gesehen hinter einer feststehenden Mittelgruppe mit Linsen und Aperturblende (Irisblende) angeordnet sind. Durch die Steuerung der beiden Fokussier-Linsengruppen gemeinsam relativ zueinander und zu den ortsfest im Objektivtubus angeordneten übrigen Linsengruppen wird der beim Fokussieren auf unterschiedliche Objektentfernungen eingeführte Gang der Bildfehler vorteilhaft gegenseitig ausgeglichen. Zusätzlich weist ein erfindungsgemäßes Objektiv eine von der Objektseite her gesehen ortsfeste Front- und eine ortsfeste, der Abbildungsebene zugewandte Hinterlinsengruppe auf. Auf diese Weise kann ein Objektiv fester Brennweite realisiert werden, welches aus fünf Linsengruppen besteht, von denen drei ortsfest und zwei zu Fokussierzwecken entlang der optischen Achse verschiebbar gelagert sind.

Im Gegensatz zu Objektiven mit Gesamtfokussierung mit Floating Element übernehmen bei der erfindungsgemäßen Fokussierung (nachfolgend auch Doppelfokussierung genannt) die beiden Fokussier-Linsengruppen gemeinsam die Verschiebung der Fokuslage zur Fokussierung der Objektebene auf die Abbildungsebene. Der Hub der Fokussiergruppen für eine Fokussierung von Unendlich in die Naheinstellung (maximaler Verfahrweg entspricht dem Gesamthub) ist durch die mechanische Baulänge des Objektivs und das Motor-/Antriebskonzept des Autofokus beschränkt. Das Verhältnis der beiden jeweiligen Gesamthübe zueinander kann dabei 1 oder auch ungleich 1 sein. Es ergibt sich aus konstruktionsbedingten räumlichen Beschränkungen und kann zur Optimierung der Aberrationen variiert werden.

Erfindungsgemäß weisen dabei die Frontlinsengruppe und die Hinterlinsengruppe negative Brechkraft auf.

Bei einer besonderen Ausführungsform der Objektive weisen die Fokussiervordergruppe, die Mittelgruppe und die Fokussierhintergruppe positive Brechkraft auf, wobei die Fokussiervordergruppe und die Fokussierhintergruppe als Einzellinsen ausgeführt sind. Sie können aber jeweils auch als Linsenduplett ausgeführt sein, wobei die positive Gesamtbrechkraft jeweils erhalten bleibt.

Beim Fokussieren von Unendlich in die Naheinstellung bewegen sich die Fokussierglieder von der Abbildungsebene weg.

Bei Objektiven für das bekannte Kleinbildformat (Bildkreisdurchmesser 43,3 mm) mit kurzer Brennweite, z.B. zwischen 13mm und 65mm, hat es sich als vorteilhaft herausgestellt, in der Frontlinsengruppe mehr Linsen mit negativer Brechkraft als positiver Brechkraft zu verwenden. In diesem Fall weist die Mittelgruppe des erfindungsgemäßen Objektivs bevorzugt positive Brechkraft auf. Dies gewährleistet auch eine günstige Verteilung der Brechkräfte in der hinteren Baugruppe und die Einhaltung konstruktiver Vorgaben, die sich beispielsweise aus den vorgegebenen maximalen Außenmaßen des Objektivs, den vorgegebenen maximalen Blenden- und Linsendurchmessern und aus den beschränkenden Maßen des Kamerabajonetts, insbesondere dessen freien Innendurchmessers ergeben.

Auf diese Weise lassen sich bevorzugt ein 21mm, ein 24mm, ein 28mm, 35mm oder 50mm Objektiv, jeweils mit einer Offenblendenzahl von 1,4 oder 2,0, realisieren, wobei sich die Brennweitenangabe in diesem Fall auf das Kleinbildformat (Bildkreisdurchmesser 43,3 mm) beziehen. Für den Fachmann ist es möglich, unter Einhaltung der in den Patentansprüchen angegebenen Parameter, Objektive mit kleinerer (bis z.B. 0,9) oder größerer (z.B. 4,0) Offenblendenzahl zu realisieren. Bei kleinerer Offenblendenzahl steigt der konstruktive Aufwand, welches ungünstige Auswirkungen auf das Objektivvolumen, die Zahl der nötigen Linsen und die Linsendurchmesser hat, wenn die optische Abbildungsleistung (Aberrationen) nicht zu stark nachlassen soll. Bei größerer Offenblendenzahl dagegen sinkt üblicherweise bei gleichbleibender oder schlechterer Abbildungsleistung der konstruktive Aufwand.

Eine Skalierung der geometrischen Daten des Objektivs auf andere Bildformate ist unter Beibehaltung der jeweiligen Offenblendenzahl möglich und bewirkt eine entsprechende Skalierung der Brennweite. Auf diese Weise realisierte Objektive, mit ansonsten bezüglich der Erfindung übereinstimmenden konstruktiven Merkmalen sind ebenfalls Gegenstand der Erfindung.

In einer besonderen Ausführungsform des erfindungsgemäßen Objektivs liegen das Verhältnis f1/f der Brennweiten f1 der Frontlinsengruppe und f des gesamten Objektivs zwischen -40 und -0,3, das Verhältnis f2/f der Brennweiten f2 der Fokussiervordergruppe und f des gesamten Objektivs zwischen 0,3 und 20, das Verhältnis f3/f der Brennweiten f3 der Mittelgruppe und f des gesamten Objektivs zwischen 0,3 und 40 , das Verhältnis f4/f der Brennweiten f4 der Fokussierhintergruppe und f des gesamten Objektivs zwischen 0,2 und 20 und das Verhältnis f5/f der Brennweiten f5 der Hinterlinsengruppe und f des gesamten Objektivs zwischen -40 und -0,3.

In einem ersten Optimierungsschritt des Verhältnisses f1/f hat sich die Einschränkung auf einen Bereich zwischen -10 und -0,8 als günstig erwiesen. Um eine übermäßige Empfindlichkeit hinsichtlich einzuhaltender Montagetoleranzen zu vermeiden, ist es besonders vorteilhaft, das Verhältnis nach oben (betragsmäßig kleine Werte) zu beschränken, und um eine möglichst kompakten Baugröße zu erreichen, ist das Verhältnis f1/f nach unten (betragsmäßig große Werte) zu beschränken. Eine hinsichtlich Montagetoleranzen und Baugröße optimierte Ausführung der Erfindung weist daher ein Verhältnis f1/f zwischen -5,3 und -1,0 auf.

Bei einer besonderen Ausführungsform des erfindungsgemäßen Objektivs kann eine Verringerung des Fokussierhubes der Fokussiervordergruppe und der Baulänge des Objektivs durch eine Einschränkung des Verhältnisses f2/f auf einen Bereich zwischen 0,8 und 15 erreicht werden. Im Allgemeinen sind kleine Fokussierhübe vorteilhaft für eine schnelle Fokussierung, sie erhöhen jedoch auch die Toleranzempfindlichkeit. Ein zu großer Fokussierhub hingegen erhöht einerseits die Baulänge und erfordert andererseits leistungsstarke und schnelle motorische Antriebe mit hohem Energieverbrauch für die Fokussierung. Für eine erfindungsgemäße Doppelfokussierung ist deshalb die Einschränkung des Verhältnisses f2/f auf einen Bereich zwischen 1,0 und 8,0 besonders vorteilhaft.

Eine in gleicher Weise für die Fokussierhintergruppe durchgeführte vorteilhafte Optimierung zeigt sich bei einer Einschränkung des Verhältnisses f4/f auf einen Bereich zwischen 0,8 und 10, wobei sich eine weitere Optimierung durch eine Einschränkung auf einen Bereich zwischen 1,3 und 4,2 erreichen lässt.

Eine vorteilhafte Ausgestaltung der Linsen der Mittelgruppe hinsichtlich Fertigungstoleranzen und Baugröße wird durch eine Einschränkung des Verhältnisses f3/f auf einen Bereich zwischen 0,8 und 10 erzielt, wobei eine erfindungsgemäße Optimierung bei einem Verhältnis f3/f in einem Bereich zwischen 1,1 und 1,8 liegt.

Bei betragsmäßig großen Werten des Verhältnisses f5/f der Hinterlinsengruppe ergibt sich eine ungünstig große Baulänge, bei betragsmäßig kleinen Werten wird die Linsengruppe empfindlich hinsichtlich Montagetoleranzen. Eine vorteilhafte Optimierung besteht daher in einer Einschränkung des Verhältnisses f5/f auf einen Bereich zwischen -10 und -0,5. Insbesondere bei Objektiven für spiegellose photographische Kameras, bei denen erfahrungsgemäß sehr kurze Abstände zwischen der in Lichtrichtung letzten (nahe der Abbildungsebene gelegenen) Linse und der Abbildungsebene vorliegen, ist es von Vorteil, den Lichteinfallswinkel, vom Lot auf die Abbildungsebene her betrachtet, nicht zu groß auszuführen. Ein Lichteinfallswinkel kleiner 35° hat sich als vorteilhaft erwiesen. Die Objektive sind damit für Kamerasysteme mit kurzem Auflagemaß und kurzer Schnittweite, z.B. jeweils kleiner 25mm, bezogen auf das zuvor beschriebene Kleinbildformat, besonders geeignet. Betragsmäßig zu kleine Werte des Verhältnisses f5/f wirken sich daher ungünstig aus, da sie den Lichteinfallswinkel erhöhen und damit die Vignettierung zunimmt. Eine bezüglich dieser Problematik optimierte Ausführung des Objektivs weist daher für das Verhältnis f5/f einen Wert im Bereich zwischen -4,7 und -0,7 auf.

In einer erfindungsgemäßen Weiterbildung weist das Objektiv ein Verhältnis der Gesamtbrennweite f zum Bildkreisdurchmesser in der Abbildungsebene (IM) zwischen 0,3 und 1,5 auf. Auf diese Weise und durch das Zusammenwirken der zuvor genauer definierten Brechkräfte der fünf Linsengruppen lassen sich Objektive mit einer Brennweite zwischen 13mm und 65mm, bezogen auf das zuvor beschriebene Kleinbildformat, realisieren.

Vorteilhaft für eine hohe Fokussiergeschwindigkeit sind leichte Fokussiergruppen. Ein Verhältnis des Volumens V jeweils der Fokussiervorder- und Fokussierhintergruppe zum Bildkreisdurchmesser in der Abbildungsebene ist in der dritten Potenz kleiner als 0,1 (V / Bd³ < 0,1) und liegt insbesondere unter 0,08 (V / Bd³ < 0,08). Besonders vorteilhaft weist die jeweilige Fokussiergruppe ein Gewicht von unter 10 g (Gramm) auf.

Der Wert für das relative Volumen von 0,08 entspricht dann, bezogen auf das Kleinbildformat, bei einem leichten Glas, wie zum Beispiel N-PSK53A der Firma Schott, einem Gewicht von 23,2 g und bei einem schweren Glas, wie zum Beispiel N-LASF31A der Firma Schott, einem Gewicht von 35,8 g. Bei Mittelformatsystemen mit 1,5 fach größerem Bildkreisdurchmesser ergeben sich somit Linsengewichte von 78,3 g bei einem leichten Glas bzw. 120,8 g bei einem schweren Glas. Bei APS-Systemen mit 1,5 fach kleinerem Bildkreisdurchmesser ergeben sich somit Linsengewichte von 6,9 g bei einem leichten Glas bzw. 10,6 g bei einem schweren Glas.

Ein geringes Gewicht ist vorteilhaft für die Fokussiergeschwindigkeit und wirkt sich vorteilhaft auf Motor- und Geräuschkonzepte aus.

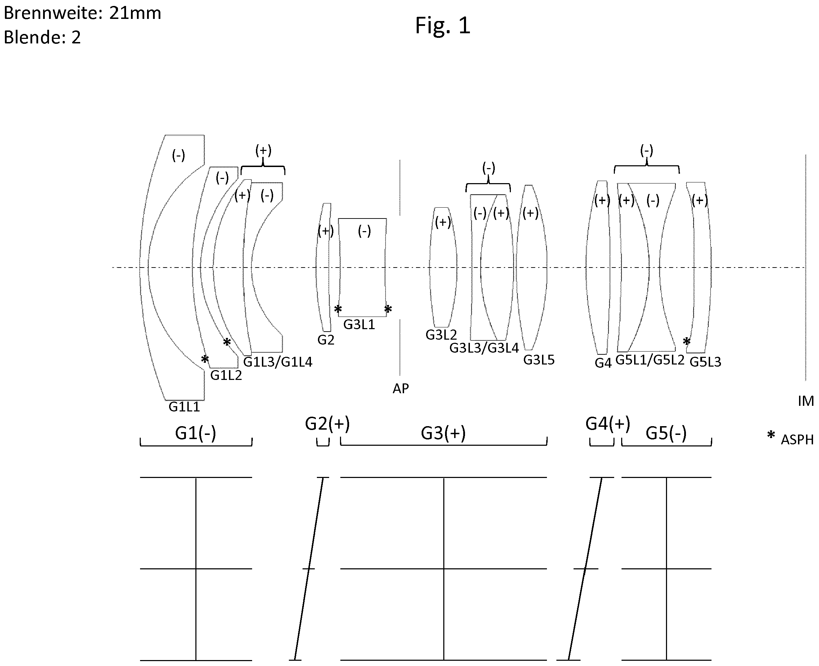

In einer besonderen Ausführungsform des erfindungsgemäßen Objektivs besteht die Frontlinsengruppe aus vier Linsengliedern, wobei das erste Linsenglied negative, das zweite Linsenglied negative, das dritte Linsenglied positive und das vierte Linsenglied negative Brechkraft aufweisen. In einer vorteilhaften Ausgestaltung sind das dritte Linsenglied und das vierte Linsenglied zu einem Linsenduplett mit positiver Gesamtbrechkraft zusammengefasst. Ein Ausführungsbeispiel mit einer erfindungsgemäßen Frontlinsengruppe ist als Objektiv 1:2 21mm in Fig. 1 der Zeichnung dargestellt und wird anhand der Zeichnung noch genauer beschrieben.

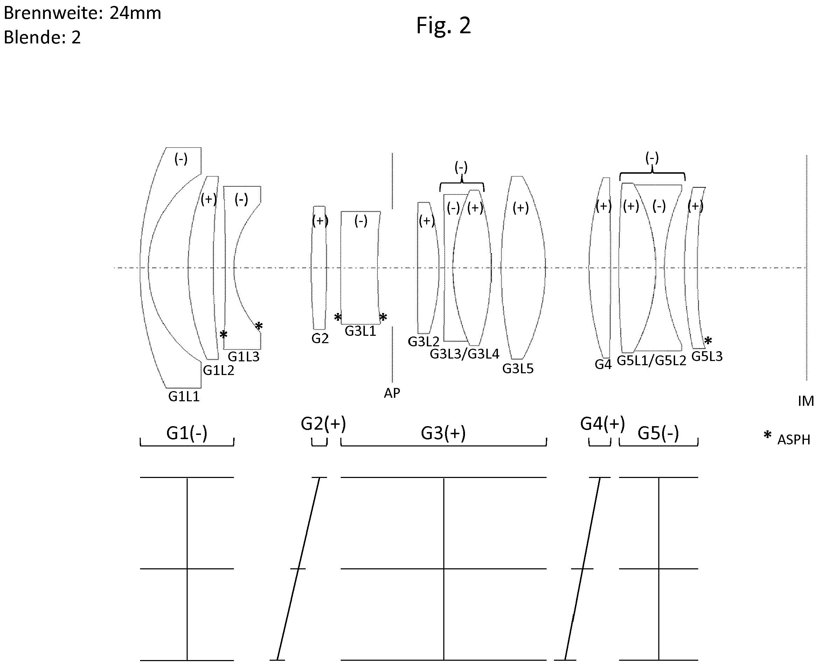

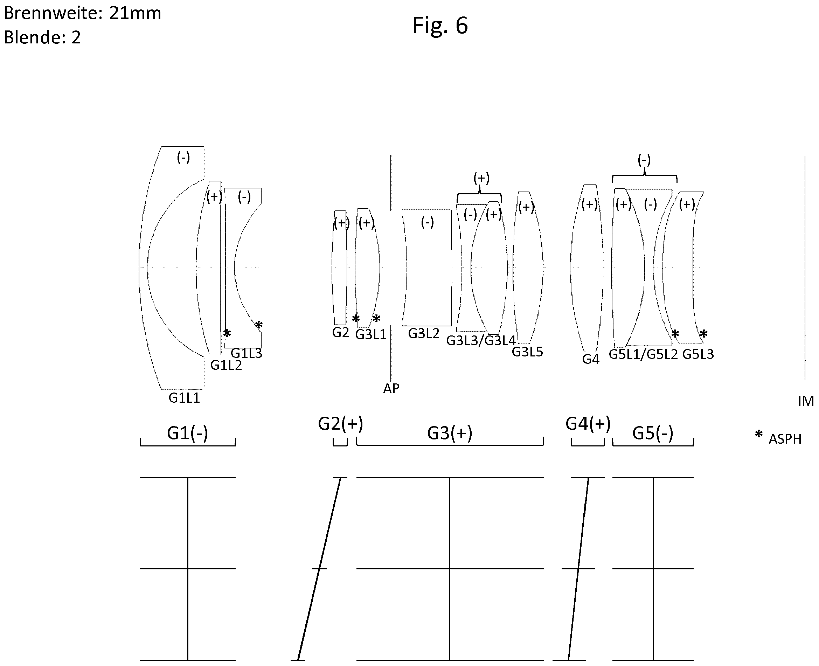

Die Frontlinsengruppe besteht bei einem alternativen Objektiv aus nur drei Linsengliedern, wobei das erste Linsenglied negative, das zweite Linsenglied positive und das dritte Linsenglied negative Brechkraft aufweisen. Die Linsenradien am zweiten und dritten Linsenglied können vorteilhaft so gewählt sein, dass beide als Linsenduplett, insbesondere als Kittglied mit insgesamt negativer Brechkraft, realisierbar sind. In der Zeichnung findet sich dazu in Fig. 2 und Fig. 6 genauer erläuterte Ausführungsbeispiele, welche als 1:2 24mm und 1:2 21mm Objektiv noch genauer beschrieben werden.

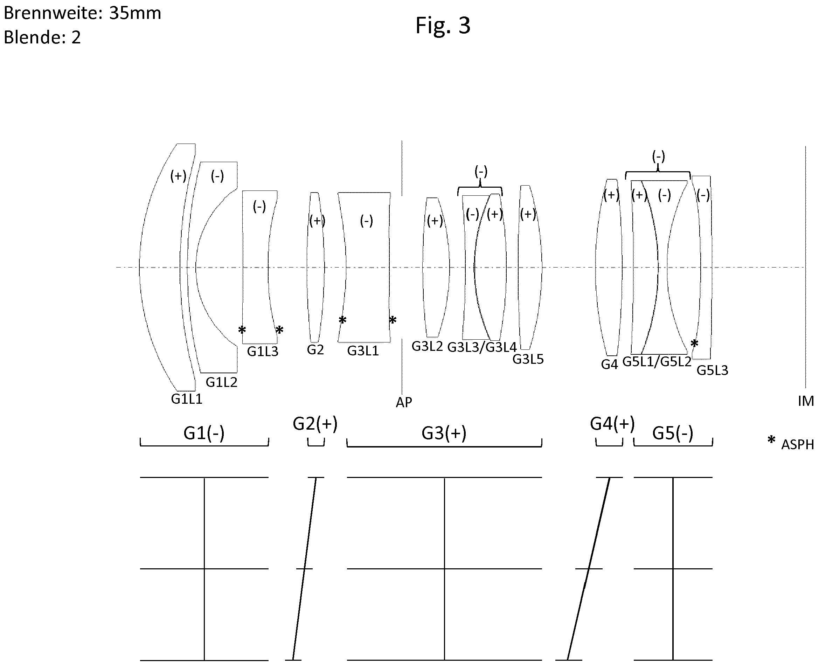

Bei einer weiteren Ausführungsform des erfindungsgemäßen Objektivs besteht die Frontlinsengruppe aus drei Linsengliedern, wobei das erste Linsenglied positive, das zweite Linsenglied negative und das dritte Linsenglied negative Brechkraft aufweisen. Die Linsenradien am ersten und zweiten Linsenglied können vorteilhaft so gewählt sein, dass beide als Linsenduplett, insbesondere als Kittglied mit insgesamt negativer Brechkraft, realisierbar sind. Fig. 3, Fig. 4 und Fig. 7 der Zeichnung zeigen entsprechende Ausführungsbeispiele, welche als 1:2 35mm und 1:2 50mm Objektiv noch genauer beschrieben werden.

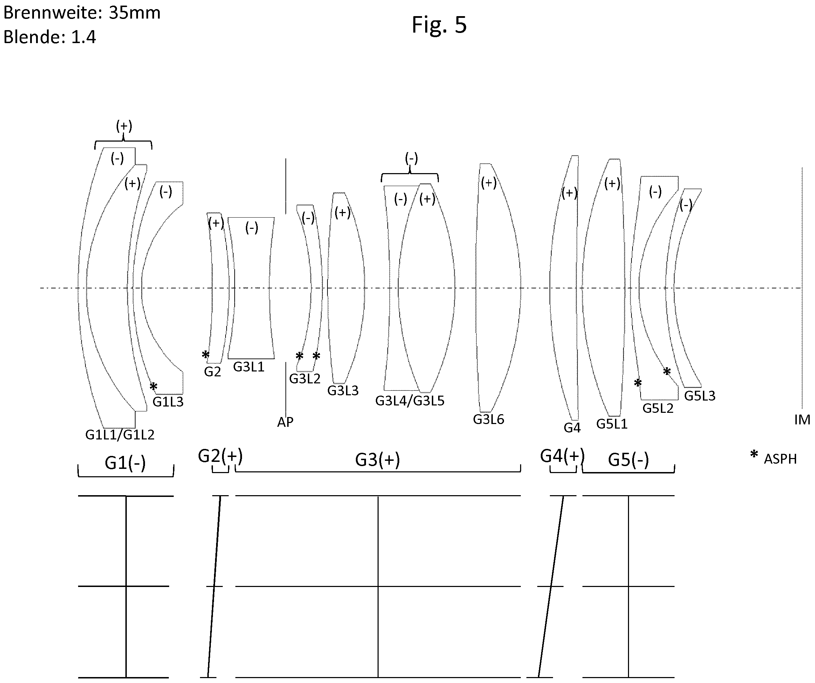

Bei einer weiteren Ausführungsform des erfindungsgemäßen Objektivs besteht die Frontlinsengruppe aus drei Linsengliedern, wobei das erste Linsenglied negative, das zweite Linsenglied positive und das dritte Linsenglied negative Brechkraft aufweisen. In einer vorteilhaften Ausgestaltung sind das erste Linsenglied und das zweite Linsenglied zu einem Linsenduplett mit positiver Gesamtbrechkraft zusammengefasst. In der Zeichnung findet sich dazu in Fig. 5 ein genauer erläutertes Ausführungsbeispiel, welches als 1:1.4 35mm Objektiv noch genauer beschrieben wird.

In einer vorteilhaften Ausbildung besteht die Mittelgruppe aus fünf Linsengliedern, wobei das erste Linsenglied negative, das zweite Linsenglied positive, das dritte Linsenglied negative, das vierte Linsenglied positive und das fünfte Linsenglied positive Brechkraft aufweisen, wobei das dritte und das vierte Linsenglied zu einem Linsenduplett mit negativer oder positiver Gesamtbrechkraft zusammengefasst sind. Dieser Aufbau der Mittelgruppe wird zusammen mit den zuvor bei der Beschreibung der Frontlinsengruppen genannten Figuren anhand der Ausführungsbeispiele für 1:2 21mm, 1:2 24mm und 1:2 35mm Objektive (Fig. 1, Fig. 2, Fig. 3, Fig. 7) genauer beschrieben.

Bei einer alternativen Ausführungsform besteht die Mittelgruppe aus fünf Linsengliedern, wobei das erste Linsenglied positive, das zweite Linsenglied negative, das dritte Linsenglied negative, das vierte Linsenglied positive und das fünfte Linsenglied positive Brechkraft aufweisen, wobei das dritte und das vierte Linsenglied zu einem Linsenduplett mit positiver Gesamtbrechkraft zusammengefasst sind. Dieser Aufbau der Mittelgruppe wird zusammen mit den zuvor bei der Beschreibung der Frontlinsengruppen genannten Figuren anhand eines Ausführungsbeispiels für ein 1:2 21mm Objektiv (Fig. 6) genauer beschrieben.

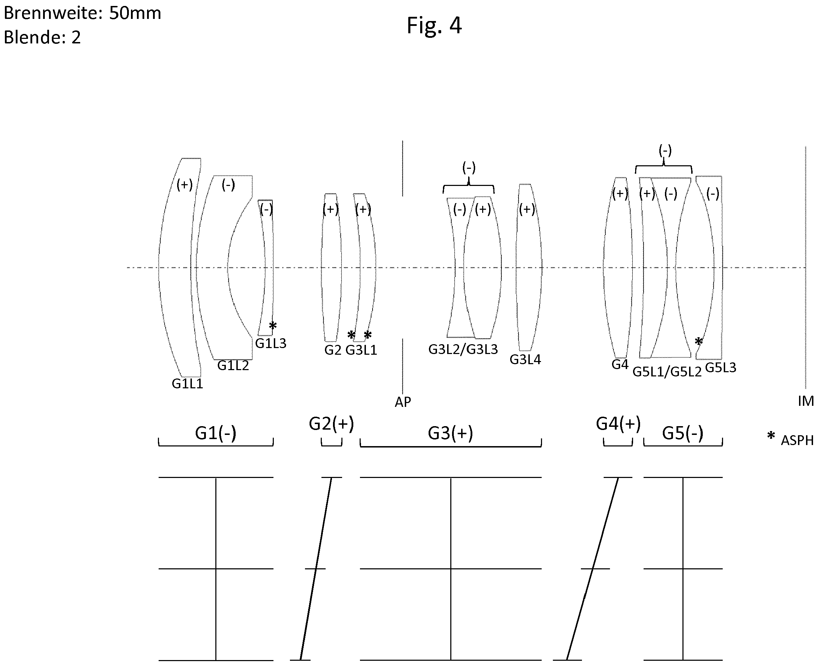

Bei einer alternativen Ausführungsform besteht die Mittelgruppe aus nur vier Linsengliedern, wobei das erste Linsenglied positive, das zweite Linsenglied negative, das dritte Linsenglied positive und das vierte Linsenglied positive Brechkraft aufweisen, wobei das zweite Linsenglied und das dritte Linsenglied zu einem Linsenduplett mit negativer Gesamtbrechkraft zusammengefasst sind. Diese Mittelgruppe wird zusammen mit der zuvor genannten und in Fig. 4 dargestellten Vorderlinsengruppe für ein 1:2 50mm Objektiv anhand eines Ausführungsbeispiels genauer beschrieben.

In einer vorteilhaften Ausbildung besteht die Mittelgruppe aus sechs Linsengliedern, wobei das erste Linsenglied negative, das zweite Linsenglied negative, das dritte Linsenglied positive, das vierte Linsenglied negative, das fünfte Linsenglied positive Brechkraft und das sechste Linsenglied positive Brechkraft aufweisen, wobei das vierte und das fünfte Linsenglied zu einem Linsenduplett mit negativer Gesamtbrechkraft zusammengefasst sind. Dieser Aufbau der Mittelgruppe wird zusammen mit den zuvor bei der Beschreibung der Frontlinsengruppen genannten Figuren anhand eines Ausführungsbeispiels für ein 1:1.4 35mm Objektiv (Fig. 5) genauer beschrieben.

In einer besonderen Ausführungsform des erfindungsgemäßen Objektivs besteht die Hinterlinsengruppe aus drei Linsengliedern, wobei das erste Linsenglied positive, das zweite Linsenglied negative und das dritte Linsenglied positive oder negative Brechkraft aufweisen, wobei das erste Linsenglied und das zweite Linsenglied zu einem Linsenduplett mit negativer Gesamtbrechkraft zusammengefasst sind. Dieser Aufbau ist besonders geeignet zur Realisierung jeweils eines 1:2 21mm, 1:2 24mm, 1:2 28mm, 1:2 35mm oder 1:2 50mm Objektivs (Fig. 1, Fig. 2, Fig. 3, Fig. 4, Fig. 6, Fig. 7).

Bei einer weiteren Ausführungsform des Objektivs besteht die Hinterlinsengruppe aus drei Linsengliedern, wobei das erste Linsenglied positive, das zweite Linsenglied negative und das dritte Linsenglied negative oder positive Brechkraft aufweisen. Dieser Aufbau ist für ein 1:1,4 35mm Objektiv (Fig. 5) besonders geeignet.

Besonders vorteilhaft ist zur Korrektur von monochromatischen Abbildungsfehlern, wie Öffnungsfehler, Koma, Astigmatismus, Wölbung und Verzeichnung in mindestens drei der fünf Linsengruppen je eine Linse mit einer oder zwei asphärischen Flächen enthalten, wobei diese vorzugsweise in den feststehenden Linsengruppen vorgesehen sind.

Um eine für spiegellose Aufnahmesysteme geeignete kurze Schnittweite (z.B. kleiner 25mm, bezogen auf das Kleinbildformat) und für Bildaufnahmesensoren geeignete Lage der Austrittpupille gewährleisten zu können, enthält die Hinterlinsengruppe erfindungsgemäß mindestens eine Linse mit einem optischen Material mit Brechzahl ne größer 1,8. Auf diese Weise lassen sich auch Beschränkungen für die maximalen Durchmesser der Linsen aufgrund vom Kamera- oder Bildaufnahmesystem vorgegebener, begrenzender Durchmesser, z.B. eines Bajonetts, einhalten. Mit den vorstehend zu den fünf Linsengruppen, insbesondere zur Hinterlinsengruppe genannten Merkmalen lassen sich Objektive mit einem ausreichend großen Abstand zwischen der Austrittspupille und der Abbildungsebene, z.B. größer 40mm realisieren. Auf diese Weise wird ein kleiner Lichteinfallswinkel vom Lot her auf die Abbildungsebene betrachtet, z.B kleiner 35°, sichergestellt.

Zur Korrektur der chromatischen Abbildungsfehler enthält sowohl die Mittelgruppe als auch die Frontlinsengruppe mindestens eine Linse mit einem optischen Material mit anomaler Teildispersion (SCD) größer 0,07.

Um die bei der Fokussierung variierenden chromatischen Aberrationen möglichst gering zu halten, enthält mindestens eine der Fokussiergruppen eine Linse mit einem optischen Material mit anomaler Teildispersion (SCD) größer 0,07.

Linsen mit einer anomalen Teildispersion haben die Aufgabe, die Wellenlängen des sekundären Spektrums (violettblauer Wellenlängenbereich) zu korrigieren. Die Teildispersion ist eine Eigenschaft des Glasmaterials, die das Verhältnis des Brechungsindex bei kurzen Wellenlängen, hier im violettblauen Wellenlängenbereich, zum Brechungsindex bei langen Wellenlängen, hier im roten Wellenlängenbereich, beschreibt. Bei Glasmaterialien mit anomaler Teildispersion weicht dieses Verhältnis ab von dem eines als Standard definierten Normalglasmaterials, wie z.B. N-F2, einem von der Firma Schott hergestellten Glas.

Es gibt eine positive und eine negative anomale Teildispersion. Die SCD-Werte, entweder positiv oder negativ, geben den Betrag und somit die Wirkung der anomalen Teildispersion an. Um die anomale Teildispersion des Glases für die Farbkorrektur nutzen zu können, bedarf es einer besonderen Kombination aus Brechkraft, Position der Linse im Bezug zur Blende und Vorzeichen der anomalen Teildispersion der jeweiligen Linse.

In der Zeichnung sind Ausführungsbeispiele der erfindungsgemäßen Objektive für das Kleinbildformat schematisch dargestellt und werden nachfolgend anhand der Figuren genauer beschrieben.

Dabei zeigen
- Fig. 1: einen Linsenschnitt durch ein Objektiv mit der Brennweite 21mm und Offenblendenzahl 2,
- Fig. 2: einen Linsenschnitt durch ein Objektiv mit der Brennweite 24mm und Offenblendenzahl 2, der ebenfalls einem nicht weiter dargestellten Objektiv mit einer Brennweite 28mm und Offenblendenzahl 2 entspricht,
- Fig. 3: einen Linsenschnitt durch ein Objektiv mit der Brennweite 35mm und Offenblendenzahl 2,
- Fig. 4: einen Linsenschnitt durch ein Objektiv mit der Brennweite 50mm und Offenblendenzahl 2,
- Fig. 5: einen Linsenschnitt durch ein Objektiv mit der Brennweite 35mm und Offenblendenzahl 1,4,
- Fig. 6: einen Linsenschnitt durch ein weiteres Objektiv mit der Brennweite 21mm und Offenblendenzahl 2,
- Fig. 7: einen Linsenschnitt durch ein weiteres Objektiv mit der Brennweite 35mm und Offenblendenzahl 2,
- Fig. 8: eine Bildsensor in einer Abbildungsebene IM.

Unter den Linsenschnitten der Figuren sind die Bewegungswege der jeweiligen Linsengruppen beim Fokussiervorgang dargestellt. Horizontale Linien stellen die Positionen der Linsengruppen G1, G2, G3, G4 und G5 dar. Die oberen dieser Linien kennzeichnen die Positionen in der Fokuseinstellung Unendlich, die unteren in der Fokuseinstellung auf die kürzeste Objektentfernung und die mittleren in einer mittleren Fokuseinstellung. Die senkrechten Linien sind den ortsfesten Linsengruppen G1, G3 und G5 zugeordnet, die schrägen Linien den verschiebbaren Fokussiergruppen G2 und G4.

Bei dem in Fig. 1 dargestellten Objektiv mit 21mm Brennweite weist die erste Linsengruppe G1 eine Konvex-Konkav-Linse G1L1 negativer Brechkraft auf, bei der der konkave (innenliegende) Krümmungsradius erheblich kleiner ist, als der konvexe (außenliegende) Krümmungsradius. Dies resultiert in einer, relativ zur Materialstärke am Linsenaußenrand geometrisch messbaren dünnen Linsenmitte. Eine zweite Linse G1L2 ist ebenfalls eine Konvex-Konkav-Linse mit negativer Brechkraft und zur ersten Linse G1L1 vergleichbaren geometrischen Verhältnissen, aber beidseitig asphärischen Flächen. Der Linsendurchmesser der zweiten Linse G1L2 ist kleiner als der der ersten Linse G1L1. Der zweiten Linse G1L2 nachfolgend sind eine Konvex-Konkav-Linse G1L3 positiver Brechkraft und eine ebenfalls Konvex-Konkav-Linse G1L4 negativer Brechkraft dargestellt, die als Linsenduplett G1L3/G1L4 mit positiver Gesamtbrechkraft zusammengefasst ist. Diese als Frontlinsengruppe bezeichnete Linsengruppe G1 ist feststehend und besitzt insgesamt negative Brechkraft.

Eine zweite und eine vierte Linsengruppe G2 und G4 haben positive Brechkraft und werden gleichzeitig zum Fokussieren entlang der darunter angegebenen Linien verschoben. Beide Fokussierglieder sind als Einzellinsen ausgeführt, wobei die Fokussiervordergruppe G2 eine Konvex-Konkav-Linse und die Fokussierhintergruppe G4 eine Bikonvex-Linse ist.

Zwischen den Fokussiergliedern ist eine feststehende Mittelgruppe G3 als Linsengruppe positiver Gesamtbrechkraft angeordnet, die in Lichtrichtung aus einer Bikonkav-Linse G3L1 negativer Brechkraft, einer Bikonvex-Linse G3L2 positiver Brechkraft, einer relativ dünnen Bikonkav-Linse G3L3 negativer Brechkraft, einer Bikonvex-Linse G3L4 positiver Brechkraft und einer Bikonkav-Linse G3L5 positiver Brechkraft besteht. Die Bikonkav-Linse G3L3 negativer Brechkraft und die Bikonvex-Linse G3L4 positiver Brechkraft sind zu einem Linsenduplett G3L3/G3L4 mit negativer Gesamtbrechkraft zusammengefasst. Diese Mittelgruppe ist feststehend und schließt zwischen der ersten Bikonkav-Linse G3L1, die beidseitig mit asphärischen Flächen ausgeführt ist, und der zweiten Bikonvex-Linse G3L2 eine Aperturblende (Irisblende) AP ein.

Die ebenfalls feststehende Hinterlinsengruppe G5 besitzt insgesamt negative Brechkraft und besteht aus einer ersten Konkav-Konvex-Linse G5L1 positiver Brechkraft und einer zweiten Bikonkav-Linse G5L2 negativer Brechkraft, die als Linsenduplett (Kittglied) G5L1/G5L2 mit insgesamt negativer Brechkraft zusammengefügt sind, und einer in Lichtrichtung nachfolgenden dritten Konkav-Konvex-Linse G5L3 positiver Brechkraft. An der konkaven Linsenfläche der letzten Linse G5L3 ist eine asphärische Fläche angeformt. Die Abbildung erfolgt auf eine Abbildungsebene IM.

Bei dem in Fig. 2 dargestellten Objektiv mit 24mm Brennweite weist die erste Linsengruppe G1 eine Konvex-Konkav-Linse G1L1 negativer Brechkraft, eine zweite Konvex-Konkav-Linse G1L2 mit positiver Brechkraft und eine dritte Bikonkav-Linse G1L3 negativer Brechkraft auf, bei der beide Flächen asphärisch ausgeführt sind. Diese als Frontlinsengruppe bezeichnete Linsengruppe G1 ist feststehend und besitzt insgesamt negative Brechkraft.

Eine zweite und eine vierte Linsengruppe G2 und G4 haben positive Brechkraft und werden gleichzeitig zum Fokussieren entlang der darunter angegebenen Linien verschoben. Beide Fokussierglieder sind als Einzellinsen ausgeführt, wobei die Fokussiervordergruppe G2 eine Bikonvex-Linse und die Fokussierhintergruppe G4 eine Bikonvex-Linse ist.

Zwischen den Fokussiergliedern ist eine feststehende Mittelgruppe G3 als Linsengruppe positiver Gesamtbrechkraft angeordnet, die in Lichtrichtung aus einer Konvex-Konkav-Linse G3L1 negativer Brechkraft, einer Bikonvex-Linse G3L2 positiver Brechkraft, einem Linsenduplett G3L3/G3L4 negativer Gesamtbrechkraft, bestehend aus einer Bikonkav-Linse G3L3 negativer Brechkraft und einer Bikonvex-Linse G3L4 positiver Brechkraft, und einer Bikonkav-Linse G3L5 positiver Brechkraft besteht. Die Linsengruppe G3 schließt zwischen der ersten Konvex-Konkav-Linse G3L1, die beidseitig mit asphärischen Flächen ausgeführt ist, und der zweiten Bikonvex-Linse G3L2 eine Aperturblende (Irisblende) AP ein.

Die ebenfalls feststehende Hinterlinsengruppe G5 besitzt insgesamt negative Brechkraft und besteht aus einer ersten Bikonvex-Linse G5L1 positiver Brechkraft und einer zweiten Bikonkav-Linse G5L2 negativer Brechkraft, die als Kittglied mit insgesamt negativer Brechkraft zusammengefügt sind, und einer in Lichtrichtung nachfolgenden Konvex-Konkav-Linse G5L3 positiver Brechkraft. Auf der konkaven Seite der Abschlusslinse G5L3 ist als asphärische Fläche ausgebildet. Die Abbildung erfolgt auf eine Abbildungsebene IM.

Bei dem in Fig. 3 dargestellten Objektiv mit 35mm Brennweite weist die erste Linsengruppe G1 eine erste Konvex-Konkav-Linse G1L1 positiver Brechkraft, eine zweite Konvex-Konkav-Linse G1L2 mit negativer Brechkraft und eine dritte Bikonkav-Linse G1L3 negativer Brechkraft auf. Bei der Bikonkav-Linse G1L3 sind beide Flächen asphärisch ausgeführt. Diese als Frontlinsengruppe bezeichnete Linsengruppe G1 ist feststehend und besitzt insgesamt negative Brechkraft.

Eine zweite und eine vierte Linsengruppe G2 und G4 haben positive Brechkraft und werden gleichzeitig zum Fokussieren entlang der darunter angegebenen Linien verschoben. Beide Fokussierglieder sind als Einzellinsen ausgeführt, wobei die Fokussiervordergruppe G2 eine Bikonvex-Linse und die Fokussierhintergruppe G4 eine Bikonvex-Linse ist.

Zwischen den Fokussiergliedern ist eine feststehende Mittelgruppe G3 als Linsengruppe positiver Gesamtbrechkraft angeordnet, die in Lichtrichtung aus einer Bikonkav-Linse G3L1 negativer, einer Bikonvex-Linse G3L2 positiver Brechkraft, einem Linsenduplett G3L3/G3L4 negativer Gesamtbrechkraft, bestehend aus einer Bikonkav-Linse G3L3 negativer Brechkraft und einer Bikonvex-Linse G3L4 positiver Brechkraft, und einer Bikonvex-Linse G3L5 positiver Brechkraft besteht. Die Linsengruppe schließt zwischen der ersten Bikonkav-Linse G3L1, die beidseitig mit asphärischen Flächen ausgeführt ist, und der zweiten Bikonvex-Linse G3L2 eine Aperturblende (Irisblende) AP ein.

Die ebenfalls feststehende Hinterlinsengruppe G5 besitzt insgesamt negative Brechkraft und besteht aus einer ersten Konkav-Konvex-Linse G5L1 positiver Brechkraft und einer zweiten Bikonkav-Linse G5L2 negativer Brechkraft, die als Kittglied mit insgesamt negativer Brechkraft zusammengefügt sind, und einer in Lichtrichtung nachfolgenden zweiten Konkav-Konvex-Linse G5L3 negativer Brechkraft. Bei der Abschlusslinse G5L3 ist die konkave Seite als eine asphärische Fläche ausgebildet. Die Abbildung erfolgt auf eine Abbildungsebene IM.

Bei dem in Fig. 4 dargestellten Objektiv mit 50mm Brennweite weist die erste feststehende Frontlinsengruppe G1 mit negativer Gesamtbrechkraft eine erste Konvex-Konkav-Linse G1L1 positiver Brechkraft, eine zweite Konvex-Konkav-Linse G1L2 mit negativer Brechkraft und eine dritte Konkav-Konvex-Linse G1L3 negativer Brechkraft auf. Bei der Konkav-Konvex -Linse G1L3 ist die konvexe Fläche asphärisch ausgeführt.

Eine zweite und eine vierte Linsengruppe G2 und G4 haben positive Brechkraft und werden gleichzeitig zum Fokussieren entlang der darunter angegebenen Linien verschoben. Beide Fokussierglieder sind als Einzellinsen ausgeführt, wobei die Fokussiervordergruppe G2 und die Fokussierhintergruppe G4 eine Bikonvex-Linse ist.

Zwischen den Fokussiergliedern ist eine feststehende Mittelgruppe G3 als Linsengruppe positiver Gesamtbrechkraft angeordnet, die in Lichtrichtung aus einer Konkav-Konvex-Linse G3L1 positiver Brechkraft mit beidseitig angeformten asphärischen Flächen, einem Linsenduplett G3L2/G3L3 negativer Gesamtbrechkraft, bestehend aus einer Bikonkav-Linse G3L2 negativer Brechkraft und einer Bikonvex-Linse G3L3 positiver Brechkraft, und einer Bikonvex-Linse G3L4 positiver Brechkraft aufgebaut ist. Die Linsengruppe schließt zwischen der ersten Konkav-Konvex-Linse G3L1 und dem Linsenduplett G3L2/G3L3 eine Aperturblende (Irisblende) AP ein.

Die ebenfalls feststehende Hinterlinsengruppe G5 besitzt insgesamt negative Brechkraft und besteht aus einer ersten Konkav-Konvex-Linse G5L1 positiver Brechkraft und einer zweiten Bikonkav-Linse G5L2 negativer Brechkraft, die als Linsenduplett (Kittglied) mit insgesamt negativer Brechkraft zusammengefügt sind, und einer in Lichtrichtung nachfolgenden dritten Konkav-Konvex-Linse G5L3 negativer Brechkraft. Die konkave Linsenfläche der dritten Konkav-Konvex-Linse G5L3 weist eine asphärische Fläche auf. Die Abbildung erfolgt auf eine Abbildungsebene IM.

Bei dem in Fig. 5 dargestellten Objektiv mit 35mm Brennweite und Offenblendenzahl 1,4 weist die feststehende Frontlinsengruppe G1 mit negativer Gesamtbrechkraft eine erste Konvex-Konkav-Linse G1L1 negativer, eine zweite Konvex-Konkav-Linse G1L2 positiver Brechkraft und eine dritte Konvex-Konkav-Linse G1L3 mit negativer Brechkraft auf. Die Krümmungsradien der ersten und zweiten Linse sind so gewählt, dass sie zu einem Linsenduplett (Kittglied) mit insgesamt positiver Brechkraft zusammengefasst sind. Die konvexe Linsenfläche der dritten Konvex-Konkav-Linse G1L3 weist eine asphärische Fläche auf.

Eine zweite und eine vierte Linsengruppe G2 und G4 haben positive Brechkraft und werden gleichzeitig zum Fokussieren entlang der darunter angegebenen Linien verschoben. Beide Fokussierglieder sind als Einzellinsen ausgeführt, wobei die Fokussiervordergruppe G2 eine Konkav-Konvex-Linse und die Fokussierhintergruppe G4 eine Konvex-Konkav-Linse ist.

Zwischen den Fokussiergliedern ist eine feststehende Mittelgruppe G3 als Linsengruppe mit positiver Gesamtbrechkraft angeordnet, die aus sechs Linsengliedern G3L1, G3L2, G3L3, G3L4, G3L5, G3L6 besteht. Die Linsengruppe weist als erstes eine Bikonkav-Linse G3L1 negativer, als zweite eine beidseitig asphärisch ausgebildete Konkav-Konvex-Linse G3L2 negativer, als dritte eine Bikonvex-Linse G3L3 positiver Brechkraft auf. Das vierte bikonkave Linsenglied G3L4 mit negativer Brechkraft ist mit der fünften Bikonvex-Linse G3L5 mit positiver Brechkraft zu einem Linsenduplett G3L4, G3L5 mit negativer Gesamtbrechkraft zusammengefasst, wobei die nachfolgend sechste Bikonvex-Linse G3L6 positive Brechkraft aufweist. Die Linsengruppe schließt zwischen der ersten Bikonkav-Linse G3L1 und der Konkav-Konvex-Linse G3L2 eine Aperturblende (Irisblende) AP ein.

Die ebenfalls feststehende Hinterlinsengruppe G5 besitzt insgesamt negative Brechkraft und besteht aus einer ersten Bikonvex-Linse G5L1 positiver Brechkraft, einer zweiten Konvex-Konkav-Linse G5L2 negativer Brechkraft mit beidseitig angeformten asphärischen Flächen und einer weiteren Konvex-Konkav-Linsen G5L3 mit negativer Brechkraft. Die Abbildung erfolgt auf eine Abbildungsebene IM.

Bei dem in Fig. 6 dargestellten Objektiv mit 21mm Brennweite und Offenblendenzahl 2 weist die erste Linsengruppe G1 eine erste Konvex-Konkav-Linse G1L1 negativer Brechkraft, eine zweite Konvex-Konkav-Linse G1L2 mit positiver Brechkraft und eine dritte Bikonkav-Linse G1L3 negativer Brechkraft auf, bei der beide Flächen asphärisch ausgeführt sind. Diese als Frontlinsengruppe bezeichnete Linsengruppe G1 ist feststehend und weist eine negative Gesamtbrechkraft auf.

Eine zweite und eine vierte Linsengruppe G2 und G4 haben positive Brechkraft und werden gleichzeitig zum Fokussieren entlang der darunter angegebenen Linien verschoben. Beide Fokussierglieder sind als Einzellinsen ausgeführt, wobei sowohl die Fokussiervordergruppe G2 als auch die Fokussierhintergruppe G4 eine Bikonvex-Linse ist.

Zwischen den Fokussiergliedern ist eine feststehende Mittelgruppe G3 als Linsengruppe positiver Gesamtbrechkraft angeordnet, die in Lichtrichtung aus einer Bikonvex-Linse G3L1 positiver, einer Konkav-Konvex-Linse G3L2 negativer Brechkraft, einem Linsenduplett G3L3/G3L4 positiver Gesamtbrechkraft, bestehend aus einer Bikonkav-Linse G3L3 negativer Brechkraft und einer Bikonvex-Linse G3L4 positiver Brechkraft, und einer Bikonvex-Linse G3L5 positiver Brechkraft besteht. Die Linsengruppe schließt zwischen der ersten Bikonvex-Linse G3L1, die beidseitig mit asphärischen Flächen ausgeführt ist, und der zweiten Konkav-Konvex-Linse G3L2 eine Aperturblende (Irisblende) AP ein.

Die ebenfalls feststehende Hinterlinsengruppe G5 besitzt insgesamt negative Brechkraft und besteht aus einer ersten Bikonvex-Linse G5L1 positiver Brechkraft und einer zweiten Bikonkav-Linse G5L2 negativer Brechkraft, die als Kittglied mit insgesamt negativer Brechkraft zusammengefügt sind, und einer in Lichtrichtung nachfolgenden Konvex-Konkav-Linse G5L3 positiver Brechkraft, die beidseitig mit asphärischen Flächen ausgebildet ist. Die Abbildung erfolgt auf eine Abbildungsebene IM.

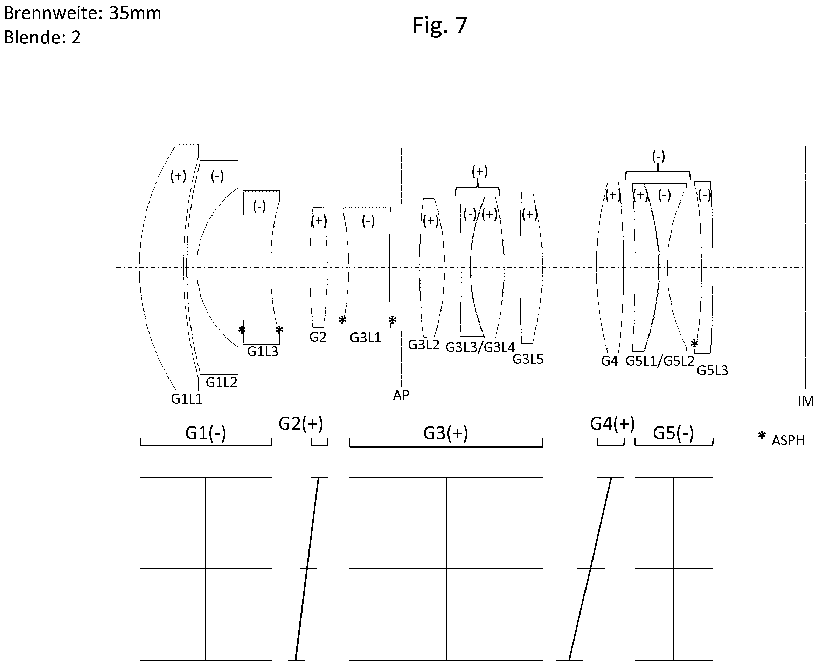

Bei dem in Fig. 7 dargestellten Objektiv mit 35mm Brennweite und Offenblendenzahl 2 weist die erste feststehende Frontlinsengruppe G1 mit negativer Gesamtbrechkraft in Lichtrichtung eine Konvex-Konkav-Linse G1L1 positiver Brechkraft, eine Konvex-Konkav-Linse G1L2 mit negativer Brechkraft und eine Bikonkav-Linse G1L3 negativer Brechkraft mit beidseitig angeformten asphärischen Flächen auf.

Eine zweite und eine vierte Linsengruppe G2 und G4 haben positive Brechkraft und werden gleichzeitig zum Fokussieren entlang der darunter angegebenen Linien verschoben. Beide Fokussierglieder sind als Einzellinsen ausgeführt, wobei sowohl die Fokussiervordergruppe G2 als auch die Fokussierhintergruppe G4 Bikonvex-Linsen sind.

Zwischen den Fokussiergliedern ist eine feststehende Mittelgruppe G3 als Linsengruppe positiver Gesamtbrechkraft angeordnet, die in Lichtrichtung aus einer Bikonkav-Linse G3L1 negativer, einer Bikonvex-Linse G3L2 positiver Brechkraft, einem Linsenduplett G3L3/G3L4 positiver Gesamtbrechkraft, bestehend aus einer Bikonkav-Linse G3L3 negativer Brechkraft und einer Bikonvex-Linse G3L4 positiver Brechkraft, und einer Bikonvex-Linse G3L5 positiver Brechkraft besteht. Die Linsengruppe schließt zwischen der ersten Bikonkav-Linse G3L1, die beidseitig mit asphärischen Flächen ausgeführt ist, und der zweiten Bikonvex-Linse G3L2 eine Aperturblende (Irisblende) AP ein.

Die ebenfalls feststehende Hinterlinsengruppe G5 besitzt insgesamt negative Brechkraft und besteht aus einer ersten Konkav-Konvex-Linse G5L1 positiver Brechkraft und einer zweiten Bikonkav-Linse G5L2 negativer Brechkraft, die als Linsenduplett (Kittglied) mit insgesamt negativer Brechkraft zusammengefügt sind, und einer in Lichtrichtung nachfolgenden zweiten Konkav-Konvex-Linse G5L3 negativer Brechkraft. Die konkave Linsenfläche der zweiten Konkav-Konvex-Linse G5L3 weist auf ihrer konkaven Seite eine asphärische Fläche auf. Die Abbildung erfolgt auf eine Abbildungsebene IM.

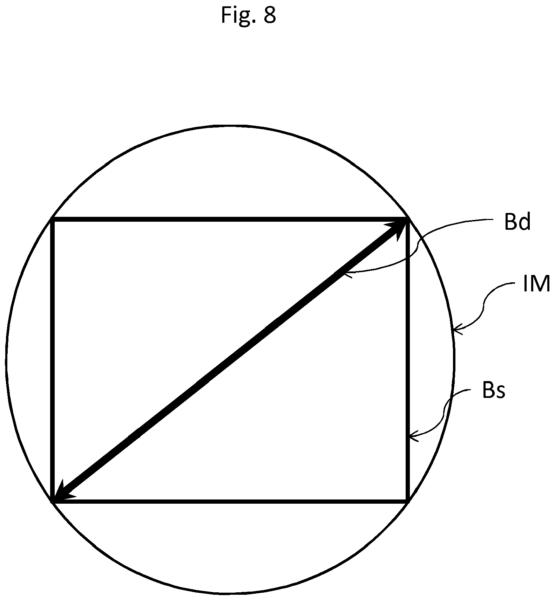

Bei der in Fig. 8 schematisch dargestellten kreisrunden Abbildungsebene IM ist mit einem Doppelpfeil ein Bildkreisdurchmesser Bd dargestellt, der mit dem Durchmesser eines rechteckig dargestellten Bildsensors Bs übereinstimmt.

Allgemein sind bei den Linsenschnitten die mit einem * gekennzeichneten Linsenfläche asphärisch gekrümmt ausgeführt.

Die Linsenschnitte in der Zeichnung sind maßstäblich dargestellt, so dass sich relative Angaben, wie z.B. die in Fig. 1 beim Linsenglied G1L1 in der Linsenmitte erheblich dünnere Materialstärke im Vergleich zur Materialstärke am Linsenrand, mit herkömmlichen geometrischen Mitteln, zeichnerisch feststellen und überprüfen lassen. Ebenso ist auf diese Weise offenbart, dass in Fig. 1 das Linsenglied G3L1 in der Linsenmitte eine um nahezu genau 3-fach (3,66-fach) dickere Materialstärke aufweist als das Linsenglied G2. Diese Zusammenhänge ergeben sich für den Fachmann ohne weiteres.

Die einzeln dargestellten und beschriebenen fünf Linsengruppen stellen in allen Objektivvarianten einen im Einzelnen notwendigen, in sich abgeschlossenen Bestandteil dar. Jede der Linsengruppen kann für sich optisch abgestimmt werden, was insbesondere durch das für jede Linsengruppe angegebene Brennweitenverhältnis zur Gesamtbrennweite zum Ausdruck kommt.

Konkrete Ausführungsbeispiele ergeben sich aus den nachstehenden Tabellen für Objektive mit 21mm, 24mm, 35mm und 50mm mit einer Offenblendenzahl von 2 und einem Objektiv mit 35mm Brennweite und Offenblendenzahl 1,4, wobei die Brennweiten jeweils auf das bekannte Kleinfilmformat (43,3mm Bildkreisdurchmesser) bezogen sind.

| | **Fig.1** | | | | |
|---|---|---|---|---|---|
| | **1:2 21mm** | **Brechungsindex ne** | **Abbezahl ve** | **SCD** | **Brechkraft [Dpt.]** |
| G1 | G1L1 | 1,51872 | 63,96 | -0,012 | -15,5 |
| | G1L2 | 1,48914 | 70,22 | 0,023 | -13,9 |
| | G1L3 | 1,85504 | 23,59 | 0,153 | 3,1 |
| | G1L4 | 1,48914 | 70,22 | 0,023 | |
| G2 | | 1,88815 | 40,52 | -0,107 | 13,0 |
| G3 | G3L1 | 1,85504 | 23,59 | 0,153 | -13,1 |
| | G3L2 | 1,49845 | 81,15 | 0,240 | 21,0 |
| | G3L3 | 1,72539 | 34,47 | -0,092 | -21 |
| | G3L4 | 1,49845 | 81,15 | 0,240 | |
| | G3L5 | 1,49845 | 81,15 | 0,240 | 19,1 |
| G4 | | 1,62033 | 63,02 | 0,082 | 13,8 |
| G5 | G5L1 | 1,93429 | 18,74 | 0,553 | -19,5 |
| | G5L2 | 1,72539 | 34,47 | -0,092 | |
| | G5L3 | 1,58547 | 59,11 | 0,010 | 6,0 |

| | **Fig. 2** | | | | |
|---|---|---|---|---|---|
| | **1:2 24mm** | **Brechungsindex ne** | **Abbezahl ve** | **SCD** | **Brechkraft [Dpt.]** |
| G1 | G1L1 | 1,48914 | 70,22 | 0,023 | -15,3 |
| | G1L2 | 1,85504 | 23,59 | 0,153 | 14,9 |
| | G1L3 | 1,48914 | 70,22 | 0,023 | -32,7 |
| G2 | | 1,88815 | 40,52 | -0,107 | 11,1 |
| G3 | G3L1 | 1,90958 | 30,78 | -0,037 | -6,2 |
| | G3L2 | 1,49845 | 81,15 | 0,240 | 13,6 |
| | G3L3 | 1,72539 | 34,47 | -0,092 | 2,8 |
| | G3L4 | 1,49845 | 81,15 | 0,240 | |
| | G3L5 | 1,49845 | 81,15 | 0,240 | 21,1 |
| G4 | | 1,62033 | 63,02 | 0,082 | 12,5 |
| G5 | G5L1 | 1,93429 | 18,74 | 0,553 | -29,4 |
| | G5L2 | 2,01169 | 28,07 | -0,054 | |
| | G5L3 | 1,58547 | 59,13 | -0,003 | 5,5 |

| | **Fig.3** | | | | |
|---|---|---|---|---|---|
| | **1:2 35mm** | **Brechungsindex ne** | **Abbezahl ve** | **SCD** | **Brechkraft [Dpt.]** |
| G1 | G1L1 | 1,85504 | 23,59 | 0,153 | 11,1 |
| | G1L2 | 1,51872 | 63,96 | -0,012 | -23,1 |
| | G1L3 | 1,62409 | 36,00 | -0,001 | -13,0 |
| G2 | | 1,88815 | 40,52 | -0,107 | 17,6 |
| G3 | G3L1 | 1,69417 | 30,83 | 0,038 | -13,1 |
| | G3L2 | 1,62033 | 63,02 | 0,082 | 22,3 |
| | G3L3 | 1,65222 | 33,53 | 0,022 | -2,0 |
| | G3L4 | 1,49845 | 81,15 | 0,240 | |
| | G3L5 | 1,49845 | 81,15 | 0,240 | 12,5 |
| G4 | | 1,60520 | 65,16 | 0,072 | 14,7 |
| G5 | G5L1 | 1,93429 | 18,74 | 0,553 | -16,9 |
| | G5L2 | 1,65803 | 39,46 | -0,119 | |
| | G5L3 | 1,69661 | 52,97 | -0,069 | -2,0 |

| | **Fig.4** | | | | |
|---|---|---|---|---|---|
| | **1:2 50mm** | **Brechungsindex ne** | **Abbezahl ve** | **SCD** | **Brechkraft [Dpt.]** |
| G1 | G1L1 | 1,85504 | 23,59 | 0,153 | 9,0 |
| | G1L2 | 1,62409 | 36,00 | -0,00 1 | -15,5 |
| | G1L3 | 1,85500 | 23,69 | 0,172 | -11,0 |
| G2 | | 1,88815 | 40,52 | -0,107 | 16,5 |
| G3 | G3L1 | 1,51872 | 63,96 | -0,012 | 4,5 |
| | G3L2 | 1,72539 | 34,47 | -0,092 | -0,9 |
| | G3L3 | 1,60520 | 65,16 | 0,072 | 14,5 |
| | G3L4 | 1,60520 | 65,16 | 0,072 | |
| G4 | | 1,60520 | 65,16 | 0,072 | 15,2 |
| G5 | G5L1 | 1,93429 | 18,74 | 0,553 | -12,7 |
| | G5L2 | 1,62409 | 36,00 | -0,001 | -12,4 |
| | G5L3 | 1,62409 | 36,00 | -0,001 | |

| | **Fig.5** | | | | |
|---|---|---|---|---|---|
| | **1:1.4 35mm** | **Brechungsindex ne** | **Abbezahl ve** | **SCD** | **Brechkraft [Dpt.]** |
| G1 | G1L1 | 1,48914 | 70,22 | 0,023 | 8,9 |
| | G1L2 | 2,01169 | 28,07 | -0,054 | |
| | G1L3 | 1,49845 | 81,15 | 0,240 | -16,1 |
| G2 | | 1,88815 | 40,52 | -0,107 | 6,8 |
| G3 | G3L1 | 1,67765 | 31,85 | 0,042 | -19,6 |
| | G3L2 | 1,85504 | 23,59 | 0,153 | -6,7 |
| | G3L3 | 1,62033 | 63,02 | 0,082 | 19,2 |
| | G3L4 | 1,73429 | 28,23 | 0,074 | 2,8 |
| | G3L5 | 1,49845 | 81,15 | 0,240 | |
| | G3L6 | 1,49845 | 81,15 | 0,240 | 11,7 |
| G4 | | 1,62033 | 63,02 | 0,082 | 7,8 |
| G5 | G5L1 | 1,93429 | 18,74 | 0,553 | 19,1 |
| | G5L2 | 1,85504 | 23,59 | 0,153 | -21,8 |
| | G5L3 | 1,69417 | 30,83 | 0,038 | -6,5 |

| | **Fig.6** | | | | |
|---|---|---|---|---|---|
| | **1:2 21mm** | **Brechungsindex ne** | **Abbezahl ve** | **SCD** | **Brechkraft [Dpt.]** |
| G1 | G1L1 | 1,48914 | 70,22 | 0,023 | 19,8 |
| | G1L2 | 1,85504 | 23,59 | 0,153 | 16,3 |
| | G1L3 | 1,48914 | 70,22 | 0,023 | -32,6 |
| G2 | | 1,49845 | 81,15 | 0,240 | 6,0 |
| G3 | G3L1 | 1,62287 | 60,03 | 0,011 | 24,9 |
| | G3L2 | 1,92336 | 31,38 | -0,064 | -12,5 |
| | G3L3 | 1,65803 | 39,46 | -0,119 | 2,0 |
| | G3L4 | 1,62033 | 63,02 | 0,082 | |
| | G3L5 | 1,49845 | 81,15 | 0,240 | 18,1 |
| G4 | | 1,62033 | 63,02 | 0,082 | 20,7 |
| G5 | G5L1 | 1,93429 | 18,74 | 0,553 | -35,2 |
| | G5L2 | 2,01169 | 28,07 | -0,054 | |
| | G5L3 | 1,58547 | 59,11 | 0,010 | 10,9 |

| | **Fig.7** | | | | |
|---|---|---|---|---|---|
| | **1:2 35mm** | **Brechungsindex ne** | **Abbezahl ve** | **SCD** | **Brechkraft [Dpt.]** |
| G1 | G1L1 | 1,85504 | 23,59 | 0,153 | 11,1 |
| | G1L2 | 1,51872 | 63,96 | -0,012 | -22,7 |
| | G1L3 | 1,62409 | 36,00 | -0,001 | -13,1 |
| G2 | | 1,88815 | 40,52 | -0,107 | 17,6 |
| G3 | G3L1 | 1,69417 | 30,83 | 0,038 | -15,3 |
| | G3L2 | 1,62033 | 63,02 | 0,082 | 20,5 |
| | G3L3 | 1,65222 | 33,53 | 0,022 | 3,1 |
| | G3L4 | 1,49845 | 81,15 | 0,240 | |
| | G3L5 | 1,49845 | 81,15 | 0,240 | 11,0 |
| G4 | | 1,60520 | 65,16 | 0,072 | 14,7 |
| G5 | G5L1 | 1,93429 | 18,74 | 0,553 | -18,2 |
| | G5L2 | 1,65803 | 39,46 | -0,119 | |
| | G5L3 | 1,69661 | 52,97 | -0,069 | -0,6 |

## Patentansprüche

1. Objektiv fester Brennweite, bestehend aus fünf Linsengruppen, wobei drei (G1, G3, G5) ortsfest und zwei (G2, G4) entlang einer optischen Achse verschiebbar gelagert sind, **dadurch gekennzeichnet, dass**
a) eine von einer Objektseite her gesehen erste Frontlinsengruppe (G1) ortsfest,
b) eine zweite Linsengruppe mit positiver Brechkraft als Fokussiervordergruppe (G2) verschiebbar,
c) eine eine in ihrer Öffnung verstellbare ortsfeste Irisblende (AP) enthaltende dritte Linsengruppe mit positiver Brechkraft als Mittelgruppe (G3) ortsfest,
d) eine vierte Linsengruppe mit positiver Brechkraft als Fokussierhintergruppe (G4) verschiebbar und
e) eine fünfte Hinterlinsengruppe (G5) ortsfest
bezüglich einer Abbildungsebene (IM) in einem Objektivtubus angeordnet sind und sowohl die Fokussiervordergruppe (G2) als auch die Fokussierhintergruppe (G4) zum Fokussieren des Objektivs auf Objekte in unterschiedlichen Objektentfernungen gemeinsam relativ zueinander und zu den ortsfest angeordneten Linsengruppen (G1, G3, G5) bewegbar sind und die Frontlinsengruppe (G1) und die Hinterlinsengruppe (G5) negative Brechkraft aufweisen.

2. Objektiv nach Anspruch 1, **dadurch gekennzeichnet, dass** sich sowohl die Fokussiervordergruppe (G2) als auch die Fokussierhintergruppe (G4) beim Fokussieren von Unendlich in die Naheinstellung von der Abbildungsebene (IM) entfernen.

3. Objektiv nach Anspruch 1 oder 2, **dadurch gekennzeichnet, dass**
a) das Verhältnis f1/f der Brennweiten f1 der Frontlinsengruppe (G1) und f des gesamten Objektivs zwischen -40 und -0,3 liegt,
b) das Verhältnis f2/f der Brennweiten f2 der Fokussiervordergruppe (G2) und f des gesamten Objektivs zwischen 0,3 und 20 liegt,
c) das Verhältnis f3/f der Brennweiten f3 der Mittelgruppe (G3) und f des gesamten Objektivs zwischen 0,3 und 40 liegt,
d) das Verhältnis f4/f der Brennweiten f4 der Fokussierhintergruppe (G4) und f des gesamten Objektivs zwischen 0,2 und 20 liegt,
e) das Verhältnis f5/f der Brennweiten f5 der Hinterlinsengruppe (G5) und f des gesamten Objektivs zwischen -40 und -0,3 liegt.

4. Objektiv nach einem der vorhergehenden Ansprüche, **dadurch gekennzeichnet, dass** das Objektiv ein Verhältnis der Gesamtbrennweite f zum Bildkreisdurchmesser in der Abbildungsebene (IM) zwischen 0,3 und 1,5 aufweist.

5. Objektiv nach einem der vorhergehenden Ansprüche, **dadurch gekennzeichnet, dass** das Verhältnis V des Volumens der jeweiligen Fokussiergruppe (G2, G4) zum Bildkreisdurchmesser (Bd) in der Abbildungsebene (IM) in der dritten Potenz unter 0,1 (V / Bd³ < 0,1), insbesondere unter 0,08, liegt oder das Gewicht der jeweiligen Fokussiergruppe (G2, G4) unter 15 g (Gramm) liegt.

6. Objektiv nach einem der vorhergehenden Ansprüche, **dadurch gekennzeichnet, dass** entweder
a) die Frontlinsengruppe (G1) aus vier Linsengliedern (G1L1, G1L2, G1L3, G1L4) besteht, wobei das erste Linsenglied (G1L1) negative, das zweite Linsenglied (G1L2) negative, das dritte Linsenglied (G1L3) positive und das vierte Linsenglied (G1L4) negative Brechkraft aufweist, wobei das dritte Linsenglied (G1L3) und das vierte Linsenglied (G1L4) zu einem Linsenduplett (G1L3, G1L4) mit positiver Gesamtbrechkraft zusammengefasst sind oder
b) die Frontlinsengruppe (G1) aus drei Linsengliedern (G1L1, G1L2, G1L3) besteht, wobei das erste Linsenglied (G1L1) negative, das zweite Linsenglied (G1L2) positive und das dritte Linsenglied (G1L3) negative Brechkraft aufweist, oder
c) die Frontlinsengruppe (G1) aus drei Linsengliedern (G1L1, G1L2, G1L3) besteht, wobei das erste Linsenglied (G1L1) positive, das zweite Linsenglied (G1L2) negative und das dritte Linsenglied (G1L3) negative Brechkraft aufweist oder
d) die Frontlinsengruppe (G1) aus drei Linsengliedern (G1L1, G1L2, G1L3) besteht, wobei das erste Linsenglied (G1L1) negative, das zweite Linsenglied (G1L2) positive und das dritte Linsenglied (G1L3) negative Brechkraft aufweist, wobei das erste Linsenglied (G1L1) und das zweite Linsenglied (G1L2) zu einem Linsenduplett (G1L1, G1L2) mit positiver Gesamtbrechkraft zusammengefasst sind.

7. Objektiv nach einem der vorhergehenden Ansprüche, **dadurch gekennzeichnet, dass** entweder
a) die Mittelgruppe (G3) aus fünf Linsengliedern (G3L1, G3L2, G3L3, G3L4, G3L5) besteht, wobei das erste Linsenglied (G3L1) negative, das zweite Linsenglied (G3L2) positive, das dritte Linsenglied (G3L3) negative, das vierte Linsenglied (G3L4) positive und das fünfte Linsenglied (G3L5) positive Brechkraft aufweist, wobei das dritte (G3L3) und das vierte Linsenglied (G3L4) zu einem Linsenduplett (G3L3, G3L4) mit negativer oder positiver Gesamtbrechkraft zusammengefasst sind oder
b) die Mittelgruppe (G3) aus fünf Linsengliedern (G3L1, G3L2, G3L3, G3L4, G3L5) besteht, wobei das erste Linsenglied (G3L1) positive, das zweite Linsenglied (G3L2) negative, das dritte Linsenglied (G3L3) negative, das vierte Linsenglied (G3L4) positive und das fünfte Linsenglied (G3L5) positive Brechkraft aufweist, wobei das dritte (G3L3) und das vierte Linsenglied (G3L4) zu einem Linsenduplett (G3L3, G3L4) mit positiver Gesamtbrechkraft zusammengefasst sind oder
c) die Mittelgruppe (G3) aus vier Linsengliedern (G3L1, G3L2, G3L3, G3L4) besteht, wobei das erste Linsenglied (G3L1) positive, das zweite Linsenglied (G3L2) negative, das dritte Linsenglied (G3L3) positive und das vierte Linsenglied (G3L4) positive Brechkraft aufweist, wobei das zweite Linsenglied (G3L2) und das dritte Linsenglied (G3L3) zu einem Linsenduplett (G3L2, G3L3) mit negativer Gesamtbrechkraft zusammengefasst sind oder
d) die Mittelgruppe (G3) aus sechs Linsengliedern (G3L1, G3L2, G3L3, G3L4, G3L5, G3L6) besteht, wobei das erste Linsenglied (G3L1) negative, das zweite Linsenglied (G3L2) negative, das dritte Linsenglied (G3L3) positive, das vierte Linsenglied (G3L4) negative, das fünfte Linsenglied (G3L5) positive Brechkraft und das sechste Linsenglied (G3L6) positive Brechkraft aufweist, wobei das vierte Linsenglied (G3L4) und das fünfte Linsenglied (G3L5) zu einem Linsenduplett (G3L4, G3L5) mit negativer Gesamtbrechkraft zusammengefasst sind.

8. Objektiv nach einem der vorhergehenden Ansprüche, **dadurch gekennzeichnet, dass** entweder
a) die Hinterlinsengruppe (G5) aus drei Linsengliedern (G5L1, G5L2, G5L3) besteht, wobei das erste Linsenglied (G5L1) positive, das zweite Linsenglied (G5L2) negative und das dritte Linsenglied (G5L3) positive oder negative Brechkraft aufweist, wobei das erste Linsenglied (G5L1) und das zweite Linsenglied (G5L2) zu einem Linsenduplett (G5L1, G5L2) mit negativer Gesamtbrechkraft zusammengefasst sind oder
b) die Hinterlinsengruppe (G5) aus drei Linsengliedern (G5L1, G5L2, G5L3) besteht, wobei das erste Linsenglied (G5L1) positive, das zweite Linsenglied (G5L2) negative und das dritte Linsenglied (G5L3) negative Brechkraft aufweist.

9. Objektiv nach einem der vorhergehenden Ansprüche, **dadurch gekennzeichnet, dass** in mindestens drei der fünf Linsengruppen (G1, G2, G3, G4, G5) eine Linse mit einer oder zwei asphärischen Flächen enthalten ist, vorzugsweise in den feststehenden Linsengruppen (G1, G3, G5).

10. Objektiv nach einem der vorhergehenden Ansprüche, **dadurch gekennzeichnet, dass** die Hinterlinsengruppe (G5) mindestens eine Linse mit einem optischen Material mit Brechzahl ne größer 1,8 enthält.

11. Objektiv nach einem der vorhergehenden Ansprüche, **dadurch gekennzeichnet, dass** die Mittelgruppe (G3) mindestens eine Linse mit einem optischen Material mit anomaler Teildispersion SCD größer 0,07 enthält.

12. Objektiv nach einem der vorhergehenden Ansprüche, **dadurch gekennzeichnet, dass** die Frontlinsengruppe (G1) mindestens eine Linse mit einem optischen Material mit anomaler Teildispersion SCD größer 0,07 enthält.

13. Objektiv nach einem der vorhergehenden Ansprüche, **dadurch gekennzeichnet, dass** mindestens eine der Fokussiergruppen (G2, G4) eine Linse mit einem optischen Material mit anomaler Teildispersion SCD größer 0,07 enthält.

## Claims

1. Lens with a fixed focal length, consisting of five lens-element groups, wherein three (G1, G3, G5) are mounted in a stationary manner and two (G2, G4) are mounted in a displaceable manner along an optical axis, **characterized in that**
a) a first front lens-element group (G1) as viewed from an object side is arranged in a stationary manner,
b) a second lens-element group having a positive refractive power as a focusing front group (G2) is arranged in a displaceable manner,
c) a third lens-element group having a positive refractive power containing a stationary iris diaphragm (AP), the aperture of which is adjustable, as a central group (G3) is arranged in a stationary manner,
d) a fourth lens-element group having a positive refractive power as a focusing back group (G4) is arranged in a displaceable manner, and
e) a fifth back lens-element group (G5) is arranged in a stationary manner
relative to an imaging plane (IM) in a lens barrel and both the focusing front group (G2) and the focusing back group (G4) are movable jointly relative to one another and to the lens-element groups (G1, G3, G5) arranged in a stationary manner in order to focus the lens on objects at different object distances, and the front lens-element group (G1) and the back lens-element group (G5) have a negative refractive power.

2. Lens according to Claim 1, **characterized in that** both the focusing front group (G2) and the focusing back group (G4) move away from the imaging plane (IM) during focusing from infinity to the near setting.

3. Lens according to Claim 1 or 2, **characterized in that**
a) the ratio f1/f of the focal lengths f1 of the front lens-element group (G1) and f of the entire lens lies between -40 and -0.3,
b) the ratio f2/f of the focal lengths f2 of the focusing front group (G2) and f of the entire lens lies between 0.3 and 20,
c) the ratio f3/f of the focal lengths f3 of the central group (G3) and f of the entire lens lies between 0.3 and 40,
d) the ratio f4/f of the focal lengths f4 of the focusing back group (G4) and f of the entire lens lies between 0.2 and 20,
e) the ratio f5/f of the focal lengths f5 of the back lens-element group (G5) and f of the entire lens lies between -40 and -0.3.

4. Lens according to any one of the preceding claims, **characterized in that** the lens has a ratio of the total focal length f to the image circle diameter in the imaging plane (IM) of between 0.3 and 1.5.

5. Lens according to any one of the preceding claims, **characterized in that** the ratio V of the volume of the respective focusing group (G2, G4) to the image circle diameter (Bd) in the imaging plane (IM) raised to the third power lies below 0.1 (V / Bd³ < 0.1), in particular below 0.08, or the weight of the respective focusing group (G2, G4) lies below 15 g (grams).

6. Lens according to any one of the preceding claims, **characterized in that** either
a) the front lens-element group (G1) consists of four lens elements (G1L1, G1L2, G1L3, G1L4), wherein the first lens element (G1L1) has a negative refractive power, the second lens element (G1L2) has a negative refractive power, the third lens element (G1L3) has a positive refractive power and the fourth lens element (G1L4) has a negative refractive power, wherein the third lens element (G1L3) and the fourth lens element (G1L4) are combined to form a lens-element doublet (G1L3, G1L4) having a positive total refractive power, or
b) the front lens-element group (G1) consists of three lens elements (G1L1, G1L2, G1L3), wherein the first lens element (G1L1) has a negative refractive power, the second lens element (G1L2) has a positive refractive power and the third lens element (G1L3) has a negative refractive power, or
c) the front lens-element group (G1) consists of three lens elements (G1L1, G1L2, G1L3), wherein the first lens element (G1L1) has a positive refractive power, the second lens element (G1L2) has a negative refractive power and the third lens element (G1L3) has a negative refractive power, or
d) the front lens-element group (G1) consists of three lens elements (G1L1, G1L2, G1L3), wherein the first lens element (G1L1) has a negative refractive power, the second lens element (G1L2) has a positive refractive power and the third lens element (G1L3) has a negative refractive power, wherein the first lens element (G1L1) and the second lens element (G1L2) are combined to form a lens-element doublet (G1L1, G1L2) having a positive total refractive power.

7. Lens according to any one of the preceding claims, **characterized in that** either
a) the central group (G3) consists of five lens elements (G3L1, G3L2, G3L3, G3L4, G3L5), wherein the first lens element (G3L1) has a negative refractive power, the second lens element (G3L2) has a positive refractive power, the third lens element (G3L3) has a negative refractive power, the fourth lens element (G3L4) has a positive refractive power and the fifth lens element (G3L5) has a positive refractive power, wherein the third lens element (G3L3) and the fourth lens element (G3L4) are combined to form a lens-element doublet (G3L3, G3L4) having a negative or positive total refractive power, or
b) the central group (G3) consists of five lens elements (G3L1, G3L2, G3L3, G3L4, G3L5), wherein the first lens element (G3L1) has a positive refractive power, the second lens element (G3L2) has a negative refractive power, the third lens element (G3L3) has a negative refractive power, the fourth lens element (G3L4) has a positive refractive power and the fifth lens element (G3L5) has a positive refractive power, wherein the third lens element (G3L3) and the fourth lens element (G3L4) are combined to form a lens-element doublet (G3L3, G3L4) having a positive total refractive power, or
c) the central group (G3) consists of four lens elements (G3L1, G3L2, G3L3, G3L4), wherein the first lens element (G3L1) has a positive refractive power, the second lens element (G3L2) has a negative refractive power, the third lens element (G3L3) has a positive refractive power and the fourth lens element (G3L4) has a positive refractive power, wherein the second lens element (G3L2) and the third lens element (G3L3) are combined to form a lens-element doublet (G3L2, G3L3) having a negative total refractive power, or
d) the central group (G3) consists of six lens elements (G3L1, G3L2, G3L3, G3L4, G3L5, G3L6), wherein the first lens element (G3L1) has a negative refractive power, the second lens element (G3L2) has a negative refractive power, the third lens element (G3L3) has a positive refractive power, the fourth lens element (G3L4) has a negative refractive power, the fifth lens element (G3L5) has a positive refractive power and the sixth lens element (G3L6) has a positive refractive power, wherein the fourth lens element (G3L4) and the fifth lens element (G3L5) are combined to form a lens-element doublet (G3L4, G3L5) having a negative total refractive power.

8. Lens according to any one of the preceding claims, **characterized in that** either
a) the back lens-element group (G5) consists of three lens elements (G5L1, G5L2, G5L3), wherein the first lens element (G5L1) has a positive refractive power, the second lens element (G5L2) has a negative refractive power and the third lens element (G5L3) has a positive or negative refractive power, wherein the first lens element (G5L1) and the second lens element (G5L2) are combined to form a lens-element doublet (G5L1, G5L2) having a negative total refractive power, or
b) the back lens-element group (G5) consists of three lens elements (G5L1, G5L2, G5L3), wherein the first lens element (G5L1) has a positive refractive power, the second lens element (G5L2) has a negative refractive power and the third lens element (G5L3) has a negative refractive power.

9. Lens according to any one of the preceding claims, **characterized in that** at least three of the five lens-element groups (G1, G2, G3, G4, G5) contain a lens element having one or two aspherical surfaces, preferably the stationary lens-element groups (G1, G3, G5).

10. Lens according to any one of the preceding claims, **characterized in that** the back lens-element group (G5) contains at least one lens element comprising an optical material having a refractive index ne of greater than 1.8.

11. Lens according to any one of the preceding claims, **characterized in that** the central group (G3) contains at least one lens element comprising an optical material having anomalous partial dispersion SCD of greater than 0.07.

12. Lens according to any one of the preceding claims, **characterized in that** the front lens-element group (G1) contains at least one lens element comprising an optical material having anomalous partial dispersion SCD of greater than 0.07.

13. Lens according to any one of the preceding claims, **characterized in that** at least one of the focusing groups (G2, G4) contains a lens element comprising an optical material having anomalous partial dispersion SCD of greater than 0.07.

## Revendications

1. Objectif à distance focale fixe, composé de cinq groupes de lentilles, trois (G1, G3, G5) étant fixes et deux (G2, G4) étant montés de manière à pouvoir coulisser le long d'un axe optique, **caractérisé en ce que**
a) un premier groupe de lentilles avant (G1), vu depuis un côté objet, est monté fixe,
b) un deuxième groupe de lentilles à pouvoir réfringent positif est monté de manière à pouvoir coulisser en tant que groupe avant de mise au point (G2),
c) un troisième groupe de lentilles à pouvoir réfringent positif, qui contient un iris (AP) fixe à ouverture réglable, est monté fixe en tant que groupe central (G3),
d) un quatrième groupe de lentilles à pouvoir réfringent positif est monté de manière à pouvoir coulisser en tant que groupe arrière de mise au point (G4) et
e) un cinquième groupe de lentilles arrière (G5) est monté fixe
par rapport à un plan d'image (IM) dans un tube d'objectif et le groupe avant de mise au point (G2) ainsi que le groupe arrière de mise au point (G4) peuvent tous deux être déplacés ensemble l'un par rapport à l'autre et par rapport aux groupes de lentilles (G1, G3, G5) montés fixes en vue d'effectuer la mise au point de l'objectif sur des objets à différentes distances d'objet et le groupe de lentilles avant (G1) et le groupe de lentilles arrière (G5) possèdent un pouvoir réfringent négatif.

2. Objectif selon la revendication 1, **caractérisé en ce que** le groupe avant de mise au point (G2) ainsi que le groupe arrière de mise au point (G4), lors de la mise au point, s'éloignent du plan d'image (IM) de l'infini au gros plan.

3. Objectif selon la revendication 1 ou 2, **caractérisé en ce que**
a) le rapport f1/f des distances focales f1 du groupe de lentilles avant (G1) et f de l'objectif complet est compris entre -40 et -0,3,
b) le rapport f2/f des distances focales f2 du groupe avant de mise au point (G2) et f de l'objectif complet est compris entre 0,3 et 20,
c) le rapport f3/f des distances focales f3 du groupe central (G3) et f de l'objectif complet est compris entre 0,3 et 40,
d) le rapport f4/f des distances focales f4 du groupe arrière de mise au point (G4) et f de l'objectif complet est compris entre 0,2 et 20,
e) le rapport f5/f des distances focales f5 du groupe de lentilles arrière (G5) et f de l'objectif complet est compris entre -40 et -0,3.

4. Objectif selon l'une des revendications précédentes, **caractérisé en ce que** l'objectif possède un rapport entre la distance focale totale f et le diamètre de champ d'image dans le plan d'image (IM) compris entre 0,3 et 1,5.

5. Objectif selon l'une des revendications précédentes, **caractérisé en ce que** le rapport V entre le volume du groupe de mise au point (G2, G4) respectif et le diamètre de champ d'image (Bd) dans le plan d'image (IM) au cube est inférieur à 0,1 (V/Bd³ < 0,1), notamment inférieur à 0,08, ou le poids du groupe de mise au point (G2, G4) respectif est inférieur à 15 g (grammes).

6. Objectif selon l'une des revendications précédente, **caractérisé en ce que** soit
a) le groupe de lentilles avant (G1) se compose de quatre éléments formant lentille (G1L1, G1L2, G1L3, G1L4), le premier élément formant lentille (G1L1) possédant un pouvoir réfringent négatif, le deuxième élément formant lentille (G1L2) un négatif, le troisième élément formant lentille (G1L3) un positif et le quatrième élément formant lentille (G1L4) un négatif, le troisième élément formant lentille (G1L3) et le quatrième élément formant lentille (G1L4) étant réunis en un doublet de lentilles (G1L3, G1L4) ayant un pouvoir réfringent total positif, soit
b) le groupe de lentilles avant (G1) se compose de trois éléments formant lentille (G1L1, G1L2, G1L3), le premier élément formant lentille (G1L1) possédant un pouvoir réfringent négatif, le deuxième élément formant lentille (G1L2) un positif et le troisième élément formant lentille (G1L3) un négatif, soit
c) le groupe de lentilles avant (G1) se compose de trois éléments formant lentille (G1L1, G1L2, G1L3), le premier élément formant lentille (G1L1) possédant un pouvoir réfringent positif, le deuxième élément formant lentille (G1L2) un négatif et le troisième élément formant lentille (G1L3) un négatif, soit
d) le groupe de lentilles avant (G1) se compose de trois éléments formant lentille (G1L1, G1L2, G1L3), le premier élément formant lentille (G1L1) possédant un pouvoir réfringent négatif, le deuxième élément formant lentille (G1L2) un positif et le troisième élément formant lentille (G1L3) un négatif, le premier élément formant lentille (G1L1) et le deuxième élément formant lentille (G1L2) étant réunis en un doublet de lentilles (G1L1, G1L2) ayant un pouvoir réfringent total positif.

7. Objectif selon l'une des revendications précédentes, **caractérisé en ce que** soit
a) le groupe central (G3) se compose de cinq éléments formant lentille (G3L1, G3L2, G3L3, G3L4, G3L5), le premier élément formant lentille (G3L1) possédant un pouvoir réfringent négatif, le deuxième élément formant lentille (G3L2) un positif, le troisième élément formant lentille (G3L3) un négatif, le quatrième élément formant lentille (G3L4) un positif et le cinquième élément formant lentille (G3L5) un positif, le troisième élément formant lentille (G3L3) et le quatrième élément formant lentille (G3L4) étant réunis en un doublet de lentilles (G3L3, G3L4) ayant un pouvoir réfringent total négatif ou positif, soit
b) le groupe central (G3) se compose de cinq éléments formant lentille (G3L1, G3L2, G3L3, G3L4, G3L5), le premier élément formant lentille (G3L1) possédant un pouvoir réfringent positif, le deuxième élément formant lentille (G3L2) un négatif, le troisième élément formant lentille (G3L3) un négatif, le quatrième élément formant lentille (G3L4) un positif et le cinquième élément formant lentille (G3L5) un positif, le troisième élément formant lentille (G3L3) et le quatrième élément formant lentille (G3L4) étant réunis en un doublet de lentilles (G3L3, G3L4) ayant un pouvoir réfringent total positif, soit
c) le groupe central (G3) se compose de quatre éléments formant lentille (G3L1, G3L2, G3L3, G3L4), le premier élément formant lentille (G3L1) possédant un pouvoir réfringent positif, le deuxième élément formant lentille (G3L2) un négatif, le troisième élément formant lentille (G3L3) un positif et le quatrième élément formant lentille (G3L4) un positif, le deuxième élément formant lentille (G3L2) et le troisième élément formant lentille (G3L3) étant réunis en un doublet de lentilles (G3L2, G3L3) ayant un pouvoir réfringent total négatif, soit
d) le groupe central (G3) se compose de six éléments formant lentille (G3L1, G3L2, G3L3, G3L4, G3L5, G3L6), le premier élément formant lentille (G3L1) possédant un pouvoir réfringent négatif, le deuxième élément formant lentille (G3L2) un négatif, le troisième élément formant lentille (G3L3) un positif, le quatrième élément formant lentille (G3L4) un négatif, le cinquième élément formant lentille (G3L5) un positif et le sixième élément formant lentille (G3L6) un pouvoir réfringent positif, le quatrième élément formant lentille (G3L4) et le cinquième élément formant lentille (G3L5) étant réunis en un doublet de lentilles (G3L4, G3L5) ayant un pouvoir réfringent total négatif.

8. Objectif selon l'une des revendications précédentes, **caractérisé en ce que** soit
a) le groupe de lentilles arrière (G5) se compose de trois éléments formant lentille (G5L1, G5L2, G5L3), le premier élément formant lentille (G5L1) possédant un pouvoir réfringent positif, le deuxième élément formant lentille (G5L2) un négatif et le troisième élément formant lentille (G5L3) un positif ou un négatif, le premier élément formant lentille (G5L1) et le deuxième élément formant lentille (G5L2) étant réunis en un doublet de lentilles (G5L1, G5L2) ayant un pouvoir réfringent total négatif, soit
b) le groupe de lentilles arrière (G5) se compose de trois éléments formant lentille (G5L1, G5L2, G5L3), le premier élément formant lentille (G5L1) possédant un pouvoir réfringent positif, le deuxième élément formant lentille (G5L2) un négatif et le troisième élément formant lentille (G5L3) un négatif.

9. Objectif selon l'une des revendications précédentes, **caractérisé en ce qu'**au moins trois des cinq groupes de lentilles (G1, G2, G3, G4, G5), de préférence les groupes de lentilles fixes (G1, G3, G5), contiennent une lentille ayant une ou deux surfaces asphériques.

10. Objectif selon l'une des revendications précédentes, **caractérisé en ce que** le groupe de lentilles arrière (G5) contient au moins une lentille avec un matériau optique ayant un indice de réfraction ne supérieur à 1,8.

11. Objectif selon l'une des revendications précédentes, **caractérisé en ce que** le groupe central (G3) contient au moins une lentille avec un matériau optique ayant une dispersion anormale partielle SCD supérieure à 0,07.

12. Objectif selon l'une des revendications précédentes, **caractérisé en ce que** le groupe de lentilles avant (G1) contient au moins une lentille avec un matériau optique ayant une dispersion anormale partielle SCD supérieure à 0,07.

13. Objectif selon l'une des revendications précédentes, **caractérisé en ce qu'**au moins l'un des groupes de mise au point (G2, G4) contient une lentille avec un matériau optique ayant une dispersion anormale partielle SCD supérieure à 0,07.
